# EUROPÄISCHE PATENTANMELDUNG

(11) **EP 1 124 190 A1**
(43) Veröffentlichungstag der Anmeldung: **16.08.2001**
(21) Anmeldenummer: 01102694.5
(22) Anmeldetag: 07.02.2001
(51) Int. Cl.: G06F 17/30

(54) **Verfahren und System zur Visualisierung dreidimensionaler Objekte**

(30) Priorität: 10.02.2000 DE 10005881
(71) Anmelder: Zimmermann, Norbert, 31787 Hameln (DE)
(72) Erfinder: Zimmermann, Norbert, 31787 Hameln (DE)
(74) Vertreter: Zinnecker, Armin, Dipl.-Ing.

(57) **Zusammenfassung**

Die vorliegende Erfindung betrifft ein Verfahren und ein System zur Visualisierung dreidimensionaler Objekte über ein Netzwerk, wobei einer an das Netzwerk angeschlossenen Visualisierungsstation Objektdaten bereitgestellt werden und von der Visualisierungsstation die Objektdaten in eine bildliche Darstellung der Objekte umgewandelt werden. Erfindungsgemäß ist vorgesehen, daß die Objektdaten in statische Daten und dynamische Daten aufgespalten werden, zunächst die statischen Daten der Visualisierungsstation off-line bereitgestellt und an dieser gespeichert werden, daß jeweils zur Visualisierung die dynamischen Daten über das Netzwerk online übertragen und der Visualisierungsstation bereitgestellt werden, und daß die dynamischen Daten und die statischen Daten von der Visualisierungsstation verknüpft und in die dreidimensionale bildliche Darstellung der Objekte umgewandelt werden.

## Beschreibung

Die vorliegende Erfindung betrifft ein Verfahren zur Visualisierung dreidimensionaler Objekte über ein Netzwerk, bei dem einer an das Netzwerk angeschlossenen Visualisierungsstation Objektdaten bereitgestellt werden und von der Visualisierungsstation die Objektdaten in eine bildliche Darstellung des Objekts umgewandelt werden.

Ferner betrifft die vorliegende Erfindung ein System zur Visualisierung dreidimensionaler Objekte mit einer an ein Netzwerk anschließbaren Visualisierungsstation zur Umwandlung von Objektdaten in eine bildliche Darstellung der Objekte.

Die Visualisierung von dreidimensionalen Szenen kann mit Hilfe leistungsstarker Graphikworkstations zum Beispiel in Simulatoren auch in Echtzeit durchgeführt werden. In neuerer Zeit sind durch den enormen Leistungszuwachs von Personal Computern einfachere dreidimensionale Visualisierungen auch in solchen Systemen möglich geworden. Dies wird z.B. in neueren Computerspielen verwirklicht, die dreidimensionale Visualisierungstechniken einsetzen.

Nunmehr wird auch versucht, dreidimensionale Objekte über Netzwerke, insbesondere das Internet, zu visualisieren. Eine zu übertragende Szene wird in Form von Daten auf den Personal Computer übertragen und mit Hilfe von bekannten Visualisierungsalgorithmen dargestellt. Die Imitation stellt dabei die verfügbare Bandbreite des Netzwerkes dar, die neben der Datenmenge die Übertragungsdauer der Daten bestimmt. Aus diesem Grund sind schon komplexe, statische dreidimensionale Szenen mit größeren Mengen zu übertragender Daten über die derzeit verfügbaren Netzwerkzugänge im Heimbereich nicht in akzeptabler Zeit darstellbar.

Gravierend wirkt dieses Problem insbesondere bei hochrealistischen dreidimensionalen Produktdarstellungen, wie sie das Ziel sogenannter Online-Shops oder der business-to-business-Kommunikation im E-Commerce Bereich sind. Sollen derartige Darstellungen bzw. die darzustellenden Objekte dynamischen Veränderungen z.B. bezüglich ihrer Position, ihrer Bewegung, ihres Preises oder ihrer Verfügbarkeit unterworfen werden, wird der Transport großer Datenmengen über das Netzwerk notwendig. Dies verhindert bei üblichen Bandbreiten heutiger Netzwerkanschlüsse im Heimbereich, die derzeit etwa zwischen 19,2 kBit/sec und 1,5 Mbit/sec liegen, die Visualisierung dreidimensionaler Shopsituationen in Echtzeit und verursacht inakzeptabel hohe Kosten.

Der vorliegenden Erfindung liegt daher die Aufgabe zugrunde, ein verbessertes Verfahren sowie ein verbessertes System der eingangs genannten Art zu schaffen, das aus dem Stand der Technik bekannte Nachteile vermeidet. Insbesondere soll mit dem verbesserten Verfahren und dem verbesserten System eine Visualisierung dreidimensionaler Objekte über Netzwerke in Echtzeit erreicht werden.

Hinsichtlich der verfahrenstechnischen Aspekte wird diese Aufgabe bei einem Verfahren der eingangs genannten Art erfindungsgemäß dadurch gelöst, daß die Objektdaten in statische Daten und dynamische Daten aufgespalten werden, zunächst die statischen Daten der Visualisierungsstation bereitgestellt und an dieser gespeichert werden, daß jeweils zur Visualisierung die dynamischen Daten über das Netzwerk übertragen und der Visualisierungsstation bereitgestellt werden, und daß die dynamischen Daten und die statischen Daten von der Visualisierungsstation verknüpft und in die bildliche Darstellung des Objekts umgewandelt werden.

Die zur dreidimensionalen Visualisierung benötigten Objektdaten werden also in zwei Teile getrennt. Nur ein Teil der Objektdaten wird über das Netzwerk übertragen. Der andere, vorzugsweise wesentlich größere Teil der Daten wird vorab im Zugriffsbereich der Visualisierungsstation gespeichert, so daß diese unmittelbar auf diesen Teil der Objektdaten zugreifen kann. Nur die dynamischen Daten brauchen online über das Netzwerk übertragen werden. Durch die Aufspaltung der Objektdaten in zwei Teile und die Übertragung nur eines Teiles der Objektdaten auf dem online Weg wird die über das Netzwerk zu übertragende Datenmenge gegenüber bisherigen Ansätzen erheblich reduziert, wodurch beträchtliche Zeit- und Kosteneinsparungen möglich werden. Die Übertragung nur eines Teils der Objektdaten über das Netzwerk ist auch bei niedrigen Bandbreiten in Echtzeit möglich. Auf diesem Wege können auch mit der Leistungsfähigkeit derzeitiger Netzwerke und Personal Computer dreidimensionale Objekte, insbesondere hochrealistische E-Commerce Online-Shops, in Echtzeit dreidimensional visualisiert werden.

In Weiterbildung der Erfindung erfolgt die Vorabübertragung der statischen Daten an die Visualisierungsstation Off-Line, also nicht über das Netzwerk. Insbesondere können die statischen Daten mittels eines separaten Datenträgers, auf dem die statischen Daten gespeichert sind, bereitgestellt werden. Zur Übertragung bzw. Bereitstellung der statischen Daten können Übertragungsmedien wie CD-ROMs, sogenannte Settop-Boxen oder DVDs sowie ferner Vorinstallationen auf Personal Computern genutzt werden. Als statische Daten werden vorzugsweise solche Objektdaten klassifiziert, die sich nicht oder nur selten ändern, wie z.B. Form und Kontur eines Produktes. Da sich der Großteil der Objektdaten eines dreidimensional darzustellenden Objektes nur selten ändert, kann dieser Anteil der Daten vorab an der Visualisierungsstation gespeichert und braucht nicht jedes Mal zur Visualisierung über das Netzwerk übertragen werden. Aktualisierungen, Veränderungen oder Updates der vorab gespeicherten statischen Daten können online oder Off-Line vorgenommen werden. Vorzugsweise werden die datenintensiven statischen Inhalte nur bei Bedarf wie z.B. bei Produktänderungen auf den neuesten Stand gebracht.

Als dynamische Daten werden in Weiterbildung der Erfindung Positionsdaten, Bewegungsdaten und/oder Attributdaten des Objekts online über das Netzwerk übertragen. Unter Attributdaten sind dabei solche Objektdaten zu verstehen, die sich rasch ändern bzw. ändern können, wie z.B. sein Preis, seine Verfügbarkeit und dergleichen.

Vorzugsweise wird das Verhältnis der dynamischen, online übertragenen Objektdaten zu den statischen, vorab Off-Line übertragenen Objektdaten sehr klein gewählt, so daß die dynamischen Daten nur einen sehr geringen Anteil an der gesamten Objektdatenmenge ausmachen. Insbesondere werden die dynamischen, online übertragenen Objektdaten auf sich tatsächlich häufig ändernde Daten beschränkt.

Die Übertragung der dynamischen Daten kann interaktiv von der jeweiligen Visualisierungsstation aus gesteuert werden. Ähnlich dem Aufrufen einer Internet-Seite kann die Steuerung derart ausgebildet sein, daß die dynamischen Objektdaten beispielsweise durch Mausclick-Technik in der Darstellung des jeweiligen Objekts abgerufen wird. Sie können übertragen werden, sobald der jeweilige Nutzer die entsprechende Seite aufruft.

Hinsichtlich der vorrichtungstechnischen Aspekte wird die oben genannte Aufgabe bei einem System der eingangs genannten Art erfindungsgemäß dadurch gelöst, daß eine Speichereinrichtung, die einen ersten Teil der Objektdaten speichert und der Visualisierungsstation zugeordnet ist, sowie eine Übertragungseinrichtung zur Übertragung eines zweiten Teils der Objektdaten über das Netzwerk zu der Visualisierungsstation vorgesehen ist, und daß die Visualisierungsstation derart ausgebildet ist, daß sie den ersten Teil der Objektdaten aus der Speichereinrichtung liest, den ersten Teil und den zweiten Teil der Objektdaten miteinander verknüpft und in die bildliche Darstellung der Objekte umwandelt.

Vorteilhafterweise kann die Visualisierungsstation eine Steuereinrichtung aufweisen, mit der die Übertragung des zweiten Teils der Daten online über das Netzwerk interaktiv steuerbar ist.

In besonders vorteilhafter Weise findet das beschriebene Verfahren sowie das beschriebene System bei E-Commerce Online-Shops und der dreidimensionalen Visualisierung der entsprechenden Produkte Verwendung. Die anzubietenden Objekte können auch mit Netzwerkbandbreiten und Datenverarbeitungsgeräten heutigen Standards hochrealistisch in Echtzeit dreidimensional dargestellt werden.

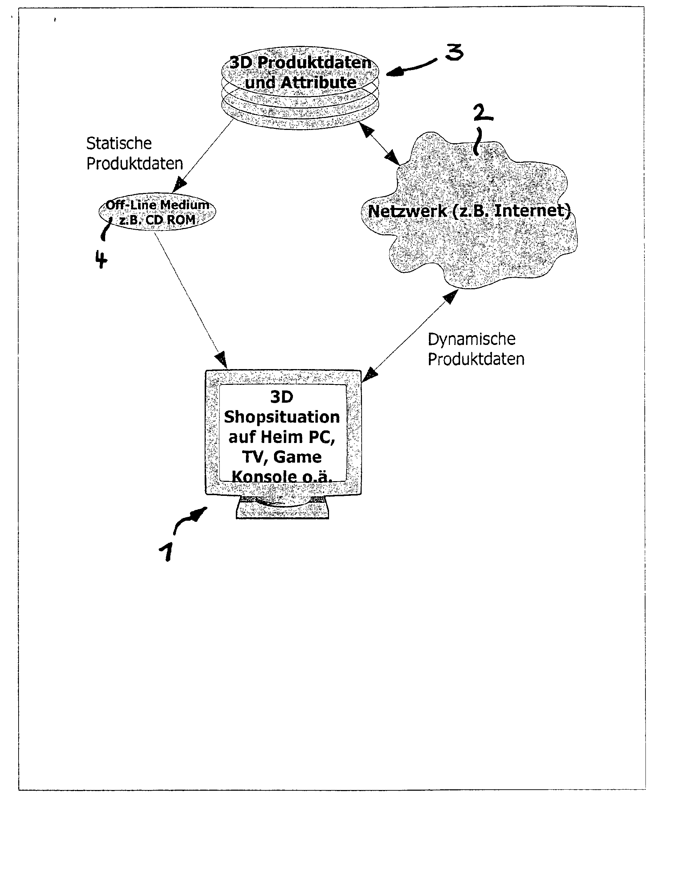

Nachfolgend wird die Erfindung anhand eines Ausführungsbeispieles und einer zugehörigen Zeichnung weiter verdeutlicht. Die Zeichnung zeigt eine Flowchart-Darstellung eines Systems zur Visualisierung dreidimensionaler Objekte gemäß einer bevorzugten Ausführung der Erfindung.

In der Zeichnung dargestellt ist ein gewöhnlicher Bildschirm eines Personal Computers 1 im Heimbereich, der über ein Netzwerk 2, insbesondere das Internet, Zugang zu einem Online-Shop-Provider der E-Commerce-Branche hat. Es versteht sich, daß anstelle des dargestellten Personal Computers auch andere Datenverarbeitungsgeräte wie Fernsehgeräte mit entsprechenden Datenverarbeitungseinheiten, Spielkonsolen oder ähnliches Verwendung finden kann. Vorzugsweise wird der übliche Personal Computer Verwendung finden.

Um dem Nutzer des Personal Computers 1 seine jeweiligen Produkte anbieten zu können, stellt der Online-Shop-Provider dem Nutzer entsprechende Objektdaten zur Verfügung, die von dem Personal Computer 1 mit entsprechenden Visualisierungs-Algorithmen in eine bildliche Darstellung auf dem Bildschirm umgewandelt werden. Die vom Online-Shop-Provider bereitgestellten Objektdaten umfassen dabei dreidimensionale Produktdaten sowie Attributdaten der entsprechenden Produkte.

Die Gesamtheit der Objektdaten 3 werden dem Personal Computer auf verschiedenen Wege zugeführt. Zum einen stellt der Online-Shop-Provider im gezeichneten Beispiel ein Off-Line Medium wie beispielsweise eine CD-ROM bereit, auf der die statischen Produktdaten, d.h. die sich nicht oder nur selten ändernden Objektdaten, gespeichert sind. Die CD-ROM wird vom Nutzer des Internet-Zuganges entsprechend installiert. Mit der Bereitstellung der CD-ROM 4 kann eine Zugangsberechtigung zu dem Online-Shop-System verknüpft sein.

Die restlichen Objektdaten, d.h. die dynamischen Produktdaten, die sich häufiger ändern wie z.B. Preise, Verfügbarkeit und dergleichen ruft der Nutzer des Netzwerkes 2 über selbiges online von dem jeweiligen Online-Shop-Provider ab. Am Personal Computer 1 werden die statischen Produktdaten und die online abgerufenen dynamischen Produktdaten miteinander verknüpft und in die entsprechende bildliche Darstellung der angebotenen Produkte umgesetzt.

## Patentansprüche

1. Verfahren zur Visualisierung dreidimensionaler Objekte über ein Netzwerk (2), bei dem einer an das Netzwerk angeschlossenen Visualisierungsstation (1) Objektdaten (3) bereitgestellt werden und von der Visualisierungsstation die Objektdaten in eine bildliche Darstellung der Objekte umgewandelt werden, dadurch gekennzeichnet, daß die Objektdaten (3) in statische Daten und dynamische Daten aufgespalten werden, zunächst die statischen Daten der Visualisierungsstation (1) bereitgestellt und an dieser gespeichert werden, daß jeweils zur Visualisierung die dynamischen Daten über das Netzwerk (2) übertragen und der Visualisierungsstation (1) bereitgestellt werden, und daß die dynamischen Daten und die statischen Daten von der Visualisierungsstation (1) verknüpft und in die bildliche Darstellung der Objekte umgewandelt werden.

2. Verfahren nach dem vorhergehenden Anspruch, wobei die statischen Daten an die Visualisierungsstation (1) off-line übertragen, insbesondere mittels einem separaten Datenträger (4), auf dem die statischen Daten gespeichert sind, bereitgestellt werden.

3. Verfahren nach einem der vorhergehenden Ansprüche, wobei als dynamische Daten Positionsdaten, Bewegungsdaten und/oder Attributdaten der Objekte übertragen werden.

4. Verfahren nach einem der vorhergehenden Ansprüche, wobei die Übertragung der dynamischen Daten interaktiv von der Visualisierungsstation (1) gesteuert wird.

5. System zur Visualisierung dreidimensionaler Objekte nach dem Verfahren gemäß einem der vorhergehenden Ansprüche, mit einer an ein Netzwerk (2) anschließbaren Visualisierungsstation (1) zur Umwandlung von Objektdaten (3) in eine bildliche Darstellung der Objekte, einer Speichereinrichtung, die einen ersten Teil der Objektdaten speichert und der Visualisierungsstation (1) zugeordnet ist, einer Übertragungseinrichtung zur Übertragung eines zweiten Teils der Objektdaten über das Netzwerk (2) zu der Visualisierungsstation (1), wobei die Visualisierungsstation (1) derart ausgebildet ist, daß sie den ersten Teil der Objektdaten (3) aus der Speichereinrichtung liest, den ersten Teil und den zweiten Teil der Objektdaten (3) miteinander verknüpft und in die bildliche Darstellung der Objekte umwandelt.

6. System nach dem vorhergehenden Anspruch, wobei die Visualisierungsstation (1) eine Steuereinrichtung zur Steuerung der Übertragung des zweiten Teils der Objektdaten (3) aufweist.
